# EUROPEAN PATENT APPLICATION

(11) **EP 4 470 678 A1**
(43) Date of publication of application: **04.12.2024**
(21) Application number: 22961285.8
(22) Date of filing: 30.11.2022
(51) Int. Cl.: B05C 5/02, H01M 4/139

(54) **COATING DIE HEAD AND COATING DEVICE**

(30) Priority: 08.10.2022 CN 202222622960 U
(71) Applicant: Contemporary Amperex Technology Co., Limited, Ningde, Fujian 352100 (CN)
(72) Inventor: LIU, Xuyong, Ningde, Fujian 352100 (CN); LIU, Mingli, Ningde, Fujian 352100 (CN); PAN, Chonghao, Ningde, Fujian 352100 (CN); SHANG, Hongwu, Ningde, Fujian 352100 (CN); ZHENG, Jianfeng, Ningde, Fujian 352100 (CN)
(74) Representative: Ziebig Hengelhaupt Intellectual Property Attorneys Patentanwaltskanzlei PartGmbB
(86) International application number: PCT/CN2022/135568
(87) International publication number: WO 2024/073928

(57) **Abstract**

A coating die head and a coating apparatus including such coating die head are provided. The coating die head includes a first die head (1) and a second die head (2) opposite each other. The first die head (1) includes a first die head body (11) and a plurality of first lip modules (12), and the plurality of first lip modules (12) are spliced sequentially along a first direction. Each of the first lip modules (12) is detachably connected to the first die head body (11), each of the first lip modules (12) is provided with a first groove (121), the first grooves (121) of the plurality of first lip modules (12) are spliced to form a main chamber for storing a slurry, and the first direction is a length direction of the main chamber. In the coating die head, the first lip modules may be replaced or recombined to change the length of the main chamber so that the coating die head is suitable for producing electrode plates with different widths.

## Description

### CROSS-REFERENCE TO RELATED APPLICATIONS

This application claims priority to Chinese Patent Application No. 202222622960.4, filed on October 08, 2022 and entitled "COATING DIE HEAD AND COATING APPARATUS", which is incorporated herein by reference in its entirety.

### TECHNICAL FIELD

This application relates to the technical field of devices for processing a battery electrode plate, and specifically to a coating die head and a coating apparatus.

### BACKGROUND

Coating is an essential process in producing lithium-ion batteries and a key process directly affecting various performance aspects of batteries, such as safety, capacity, and service life. Coating is to apply evenly and continuously or intermittently a prepared paste-like viscous slurry onto a substrate (for example, an aluminum foil or copper foil). During coating, it is necessary to guarantee thickness uniformity of coating positions and control the coating thickness within a tolerance range required by the process.

In coating the substrate with a slurry, when electrode plates with different widths are produced, the entire coating die head needs to be replaced, leading to high manufacturing costs.

### SUMMARY

In view of the foregoing problem, this application provides a coating die head and a coating apparatus, which can avoid the problem that the entire coating die head needs to be replaced in producing electrode plates with different widths.

According to a first aspect, this application provides a coating die head. The coating die head includes a first die head and a second die head opposite each other. The first die head includes a first die head body and a plurality of first lip modules, and the plurality of first lip modules are spliced sequentially along a first direction. Each of the first lip modules is detachably connected to the first die head body, each of the first lip modules is provided with a first groove, the first grooves of the plurality of first lip modules are spliced to form a main chamber for storing a slurry, and the first direction is a length direction of the main chamber.

In a technical solution of the embodiments of this application, in producing electrode plates with different widths, the first lip module may be replaced or the first lip modules may be recombined to change the length of the main chamber, so that the coating die head is suitable for producing electrode plates with different widths. Thereby, it is unnecessary to replace the entire coating die head, reducing the manufacturing costs.

In some embodiments, the first die head includes a first die head body and a plurality of first lip modules, and the plurality of first lip modules are spliced sequentially along a first direction. The first die head body is provided with a first insertion slot extending along the first direction, each of the first lip modules is provided with a first protruding block, and the first protruding block is inserted into the first insertion slot. When the first lip module is replaced, the first lip module can be conveniently mounted into the first insertion slot of the first die head body under the action of the first protruding block. When the first lip modules are recombined, the first lip modules that needn't be removed may slide along the first insertion slot under the action of the first protruding block, so that a plurality of first lip modules 12 are spliced sequentially, thus reducing the assembly difficulty of recombining the first lip modules.

In some embodiments, the first die head body is provided with a first insertion slot extending along the first direction, each of the first lip modules is provided with a first protruding block, and the first protruding block is inserted into the first insertion slot. The first insertion slot is provided with a plurality of first positioning holes, the first die head includes a plurality of first threaded members in one-to-one correspondence with the first positioning holes, and the first lip module is fixed to the first die head body via the first threaded member penetrating through the first positioning hole. The first threaded member improves the stability of connection between the first lip module and the first die head body.

In some embodiments, the first die head body includes a base and a boss, the boss protrudes from a first surface of the base, the first lip module is disposed on the first surface, and the first insertion slot is provided in the boss.

In some embodiments, the first die head body includes a base and a boss, the boss protrudes from a first surface of the base, the first lip module is disposed on the first surface, and the first insertion slot is provided in the boss. The first surface is provided with a plurality of second positioning holes, the first die head further includes a plurality of second threaded members in one-to-one correspondence with the second positioning holes, and the first lip module is fixed to the base via the second threaded member penetrating through the second positioning hole. The second threaded member improves the stability of connection between the first lip module and the first die head body.

In some embodiments, a first lip module is provided with a second groove, and the second grooves of the plurality of first lip modules are spliced to form an auxiliary chamber for storing the slurry. The auxiliary chamber can be used for storing the slurry flowing from the main chamber, thus improving the feeding uniformity of the coating die head.

In some embodiments, a first sealing member is disposed between adjacent two of the first lip modules. The first sealing member improves the sealing performance of the first die head, reducing the risk of slurry leakage from the first die head.

In some embodiments, the first die head includes a first die head body and a plurality of first lip modules, the plurality of first lip modules are spliced sequentially along a first direction, and each of the first lip modules is detachably connected to the first die head body. The second die head includes a second die head body and a plurality of second lip modules, the plurality of second lip modules are spliced sequentially along the first direction, each of the second lip modules is detachably connected to the second die head body, and a gap between the second lip module and the first lip module forms a lip of the coating die head. When the lip of the coating die head is worn or deformed, the first lip module or the second lip module may be replaced or repaired individually without the need to replace the entire coating die head, thus reducing the manufacturing costs.

In some embodiments, the second lip modules are in one-to-one correspondence with the first lip modules. Such design simplifies the structure of the first lip module and the second lip module, reducing the manufacturing costs.

In some embodiments, a first plating is disposed on a side of the first lip module facing towards the second lip module, and a second plating is disposed on a side of the second lip module facing towards the first lip module. Such design improves the wear resistance of the first lip module and the second lip module, improving the service life of the first lip module and the second lip module.

In some embodiments, the second die head body is provided with a second insertion slot extending along the first direction, the second lip module is provided with a second protruding block, and the second protruding block is inserted into the second insertion slot. When the second lip module is replaced, the second lip module can be conveniently mounted into the second insertion slot of the second die head body under the action of the second protruding block.

In some embodiments, the second die head body is provided with a second insertion slot extending along the first direction, the second lip module is provided with a second protruding block, and the second protruding block is inserted into the second insertion slot. The second protruding block is provided with a plurality of third positioning holes, the second die head includes a plurality of third threaded members in one-to-one correspondence with the third positioning holes, and the second lip module is fixed to the second die head body via the third threaded member penetrating through the third positioning hole. The third threaded member improves the stability of connection between the second lip module and the second die head body.

In some embodiments, a second sealing member is disposed between adjacent two of the second lip modules. The second sealing member improves the sealing performance of the second die head, reducing the risk of slurry leakage from the second die head.

According to a second aspect, this application provides a coating apparatus, including the coating die head in the foregoing embodiments.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same parts are denoted by same reference signs. In the accompanying drawings:
FIG. 1 is an axonometric diagram of a coating die head according to some embodiments of this application;
FIG. 2 is an axonometric diagram of a first die head according to some embodiments of this application;
FIG. 3 is an axonometric diagram of a first die head body according to some embodiments of this application;
FIG. 4 is a locally enlarged view of a position A in FIG. 3 according to this application;
FIG. 5 is an axonometric diagram of a first lip module according to some embodiments of this application;
FIG. 6 is an axonometric diagram of a first lip module according to some other embodiments of this application;
FIG. 7 is a side view of a coating die head according to some embodiments of this application;
FIG. 8 is a locally enlarged view of a position B in FIG. 7 according to this application;
FIG. 9 is an axonometric diagram of a second die head according to some embodiments of this application;
FIG. 10 is an axonometric diagram of a second die head body according to some embodiments of this application;
FIG. 11 is an axonometric diagram of a second lip module according to some embodiments of this application; and
FIG. 12 is a locally enlarged view of a position C in FIG. 9 according to this application.

Reference signs in specific embodiments are as follows:
1. first die head; 11. first die head body; 111. base; 1111. first surface; 1112. second positioning hole; 112. boss; 1121. first insertion slot; 1122. first positioning hole; 12. first lip module; 121. first groove; 122. first protruding block; 1221. first threaded hole; 123. second groove; 13. first threaded member; 14. second threaded member; 2. second die head; 21. second die head body; 211. second insertion slot; 22. second lip module; 221. second protruding block; 2211. third positioning hole; 23. third threaded member; 3. lip; and X. first direction.

### DETAILED DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In this specification, reference to "embodiment" means that specific features, structures, or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "a plurality of' means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

Coating is to apply a thin layer of coating material, in liquid or powder form, onto the surface of objects such as fabric, paper, metal foil, or sheet. Coating is an indispensable step in the process of manufacturing battery cells.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied to a partial surface of the positive electrode current collector, and a part of the positive electrode current collector uncoated with the positive electrode active substance layer is used as a positive electrode tab. A lithium-ion battery is used as an example, for which, the positive electrode current collector may be made of aluminum, and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied to a partial surface of the negative electrode current collector, and a part of the negative electrode current collector uncoated with the negative electrode active substance layer is used a negative electrode tab. The negative electrode current collector may be made of copper, and the negative electrode active substance may be carbon, silicon, or the like. To allow a large current to pass through without any fusing, a plurality of positive electrode tabs are provided and stacked together, and a plurality of negative electrode tabs are provided and stacked together.

In producing the battery cell, a coating process is used to apply a positive electrode active substance to the positive electrode current collector, and apply a negative electrode active substance to the negative electrode current collector, that is, to apply evenly and continuously or intermittently a prepared paste-like viscous slurry (the positive electrode active substance or negative electrode active substance) to a substrate (the positive electrode current collector or negative electrode current collector). During coating, it is necessary to guarantee thickness uniformity of coating positions and control the coating thickness within a tolerance range required by the process.

A coating apparatus used in the coating process includes a coating die head, a feeding tube, and a slurry tank. A die head body typically includes an upper die head, a lower die head, a feeding inlet, and a material chamber. The material chamber is always disposed on the lower die head, and a gap between the upper die head and the lower die head forms a lip. During coating with the coating apparatus, the slurry in the slurry tank enters the material chamber through the feeding tube via the feeding inlet and flows out of the material chamber, and then is sprayed from the lip onto and applied to the substrate.

To ensure good thickness uniformity of coated portions during coating, length of the material chamber typically needs to match the width of the electrode plate. For example, if the width of the electrode plate is smaller than the length of the material chamber, the slurry at the end of the material chamber may be prone to abnormal issues such as sedimentation, gelation, and agglomeration due to decreased fluidity, and these abnormal issues cause fluctuations in the pressure of the material chamber and exacerbate the thickness uniformity of the coated positions.

The inventors have noted that in producing electrode plates with different widths, to avoid the foregoing problems, the entire coating die head needs to be replaced, such that the substituted coating die head matches the width of the electrode plate, but the replacement of the entire die head rapidly increases the manufacturing costs.

Based on the foregoing considerations, to resolve the problem of increased manufacturing costs caused by replacement of the entire coating die head in producing electrode plates with different widths, the inventors have designed, through deep research, a coating die head with the lower die head modularized, allowing the material chamber on the lower die head to have a variable length so as to adapt to electrode plates with different widths. Specifically, the lower die head is designed including a plurality of unit modules, the unit module is provided with a groove accommodating a slurry, all the unit modules are spliced to form the entire lower die head, and all the grooves are spliced to form the material chamber storing the slurry. In producing electrode plates with different widths, the unit module is replaced or the unit modules are recombined to change the length of the material chamber, such that the coating die head fits with electrode plates with different widths for production without the need to replace the entire coating die head, thus reducing the manufacturing costs.

The coating die head disclosed in this embodiment of this application may be configured for, without limitation to, application of a slurry to the positive electrode current collector or the negative electrode current collector.

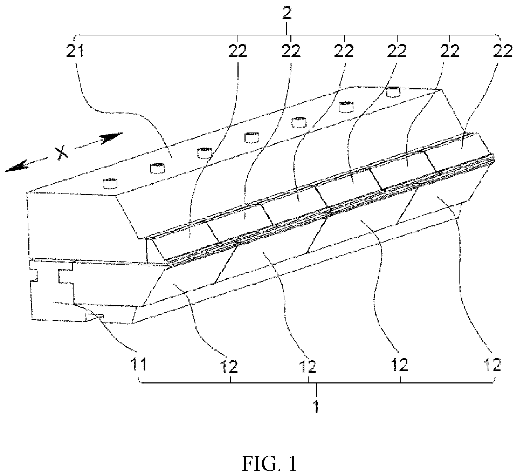

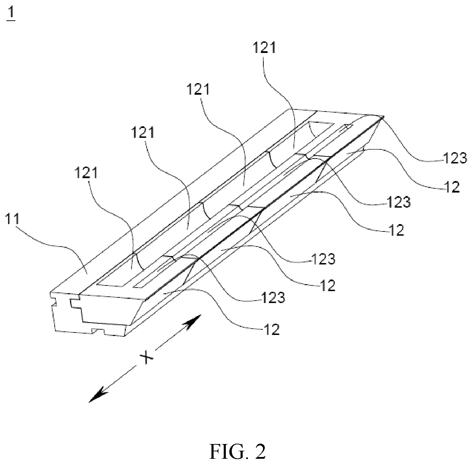

According to some embodiments of this application, referring to FIGs. 1 and 2, this application provides a coating die head. The coating die head includes a first die head 1 and a second die head 2 opposite each other. The first die head 1 includes a first die head body 11 and a plurality of first lip modules 12, and the plurality of first lip modules 12 are spliced sequentially along a first direction X. Each of the first lip modules 12 is detachably connected to the first die head body 11, each of the first lip modules 12 is provided with a first groove 121, the first grooves 121 of the plurality of first lip modules 12 are spliced to form a main chamber for storing a slurry, and the first direction X is a length direction of the main chamber.

The first die head 1 may be an upper die head/lower die head, meaning that the main chamber may be disposed on the upper die head or the lower die head.

In some embodiments, the first die head 1 and the second die head 2 may be connected detachably. For example, the first die head 1 and the second die head 2 are connected using a plurality of screws.

After the first die head 1 and the second die head 2 are connected, a gap needs to be left between opposite sides on the first die head 1 and the second die head 2, to form a lip 3 via which the slurry flows out of the coating die head.

In some embodiments, to improve the service life of the first die head 1 and the second die head 2, coatings enhancing their wear resistance may be additionally disposed on a side of the first die head 1 and a side of the second die head 2 that face the lip 3.

The feeding inlet via which the slurry enters the main chamber may be disposed on a bottom surface of the coating die head or on a side surface of the coating die head. In some embodiments, the feeding inlets of the coating die head may be a plurality of channels sequentially running through the first die head body 11 and the first lip module 12. For example, the channel may be formed by joining first holes in the first die head body 11 with second holes, in one-to-one correspondence with the first holes, in the first lip modules 12. There may be one or more channels, and if a plurality of channels are provided, channels not in communication with the feeding tube need to be blocked using a rubber plug/silicone plug, to ensure the sealing performance of the main chamber.

Referring to FIG. 2, the first groove 121 may have one end open and the other end closed, where the closed end of the first groove 121 forms a block portion, which is configured to limit the flow of the slurry. Alternatively, the first groove 121 may have both ends open.

Two ends of the main chamber each need to be provided with a block member or have a block portion, so as to form an accommodating space for storing the slurry. For example, referring to FIG. 2, one end, of each of the first grooves 121 of the first lip modules 12 at two ends of the first die head 1, away from the center of the main chamber has a block portion, and both ends of the first groove 121 of the first lip module 12 in the middle of the first die head 1 are open. In some embodiments, both ends of the first groove 121 of the first lip module 12 are open, and after the first lip modules 12 are sequentially spliced along the first direction X, block members need to be additionally disposed at two ends of the first die head 1, where the block member can seal the opening of the first groove 121. For example, the block member may be a plate, and the plate is mounted on a side surface of each of the first lip modules 12 at two ends of the first die head 1 using screws.

In some embodiments, considering the processing costs and processing difficulty, the accuracy of processing the end surface of the first lip module 12 may be decreased. In addition, after the first lip modules 12 are spliced, an assembly gap is likely to be present between adjacent first lip modules 12, and to improve the sealing performance of the first die head 1 formed through splicing, a sealing member may be disposed between adjacent first lip modules 12.

Lengths of the first grooves 121 of different first lip modules 12 may be the same/different, and the mounting positions are random.

In some embodiments, the lengths of the first grooves 121 of different first lip modules 12 are all D, and the length of the main chamber is an integral multiple of D, where D may be designed as a common factor of a plurality of coating widths. In producing electrode plates with different widths, the length of the main chamber can match the width of the electrode plate provided that a specific number of first lip modules 12 are selected and spliced.

In some embodiments, a plurality of first lip modules 12, each including a block portion, with first grooves 121 of different lengths may be provided, and the length of the main chamber can be alternatively adjusted by only replacing the first lip module 12 with the block portion.

The first lip module 12 and the first die head body 11 may be connected via a mortise-tenon structure or may be connected via a fastener such as a screw or a bolt and a nut.

In some embodiments, the first lip module 12 may be additionally provided with a second groove 123 for storing the slurry.

In producing electrode plates with different widths, the first lip module 12 may be replaced or the first lip modules 12 may be recombined to change the length of the main chamber, allowing the coating die head to adapt to electrode plates with different widths for production. Thereby, it is unnecessary to replace the entire coating die head, reducing the manufacturing costs.

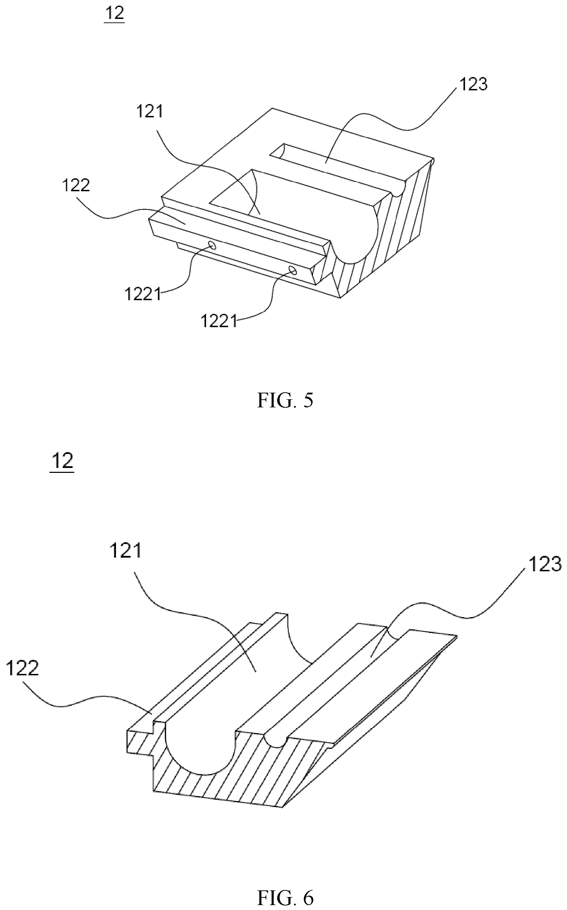

According to some embodiments of this application, referring to FIGs. 2 to 6, the first die head 1 includes a first die head body 11 and a plurality of first lip modules 12, and the plurality of first lip modules 12 are spliced sequentially along a first direction X. The first die head body 11 is provided with a first insertion slot 1121 extending along the first direction X, each of the first lip modules 12 is provided with a first protruding block 122, and the first protruding block 122 is inserted into the first insertion slot 1121.

The cross-sectional shape of the first protruding block 122 may be trapezoidal, square, rectangular, semicircular, or the like.

The first protruding block 122 may be integrated with the first lip module 12 during processing or after subjected to separate processing, formed through welding on the first lip module 12.

When the first lip module 12 is replaced, the first lip module 12 can be conveniently mounted into the first insertion slot 1121 of the first die head body 11 under the action of the first protruding block 122. When the first lip modules 12 are recombined, the first lip modules 12 that needn't be removed may slide along the first insertion slot 1121 under the action of the first protruding block 122, so that a plurality of first lip modules 12 are spliced sequentially, thus reducing the assembly difficulty of recombining the first lip modules 12.

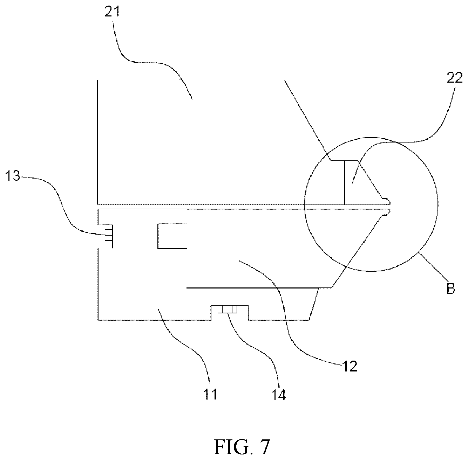

According to some embodiments of this application, referring to FIGs. 2 to 7, the first die head body 11 is provided with a first insertion slot 1121 extending along the first direction X, each of the first lip modules 12 is provided with a first protruding block 122, and the first protruding block 122 is inserted into the first insertion slot 1121. The first insertion slot 1121 is provided with a plurality of first positioning holes 1122, the first die head 1 includes a plurality of first threaded members 13 in one-to-one correspondence with the first positioning holes 1122, and the first lip module 12 is fixed to the first die head body 11 via the first threaded member 13 penetrating through the first positioning hole 1122.

The first positioning hole 1122 may be an optical hole, a threaded hole, a countersunk hole, or the like.

The first threaded member 13 may be a screw/bolt. For example, the first threaded member 13 is a bolt, and after the first threaded member 13 penetrates through the first positioning hole 1122, the first lip module 12 can be fixed to the first die head body 11 via a nut fitting with the bolt.

The first die head 1 may further include a gasket fitting with the first threaded member 13.

In some embodiments, to fit with the first threaded member 13, a first threaded hole 1221 fitting with the first threaded member 13 may be processed in the first protruding block 122.

The first threaded member 13 improves the stability of connection between the first lip module 12 and the first die head body 11.

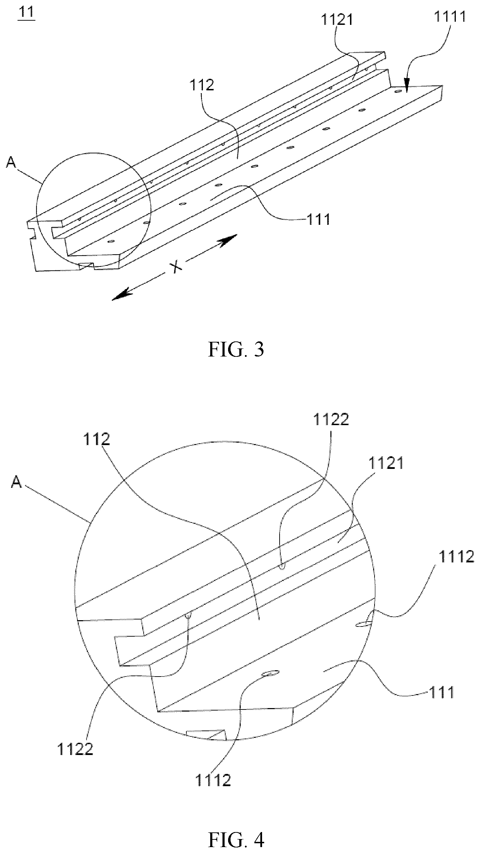

According to some embodiments of this application, referring to FIG. 3, the first die head body 11 includes a base 111 and a boss 112, the boss 112 protrudes from a first surface 1111 of the base 111, the first lip module 12 is disposed on the first surface 1111, and the first insertion slot 1121 is provided in the boss 112.

The base 111 and the boss 112 may be integrated, or after the boss 112 and the base 111 are separately processed, the boss 112 is formed through welding on the first surface 1111 of the base 111.

The boss 112 may be disposed in the middle/at an edge of the first surface 1111 of the base 111.

According to some embodiments of this application, referring to FIGs. 2 to 7, the first die head body 11 includes a base 111 and a boss 112, the boss 112 protrudes from a first surface 1111 of the base 111, the first lip module 12 is disposed on the first surface 1111, and the first insertion slot 1121 is provided in the boss 112. The first surface 1111 is provided with a plurality of second positioning holes 1112, the first die head 1 further includes a plurality of second threaded members 14 in one-to-one correspondence with the second positioning holes 1112, and the first lip module 12 is fixed to the base 111 via the second threaded member 14 penetrating through the second positioning hole 1112.

The second positioning hole 1112 may be an optical hole, a threaded hole, a countersunk hole, or the like.

The second threaded member 14 may be a screw/bolt. For example, the second threaded member 14 is a bolt, and after the second threaded member 14 penetrates through the second positioning hole 1112, the first lip module 12 can be fixed to the first die head body 11 via a nut fitting with the bolt.

The first die head 1 may further include a gasket fitting with the second threaded member 14.

The second threaded member 14 improves the stability of connection between the first lip module 12 and the first die head body 11.

According to some embodiments of this application, referring to FIGs. 2, 5, and 6, the first lip module 12 is provided with a second groove 123, and the second grooves 123 of the plurality of first lip modules 12 are spliced to form an auxiliary chamber for storing the slurry.

In some embodiments, after the plurality of first lip modules 12 are spliced sequentially along the first direction X, adjacent second grooves 123 are spaced apart from each other along the first direction X.

The auxiliary chamber can be used for storing the slurry flowing from the main chamber to balance the pressure in the main chamber, thus improving the feeding uniformity of the coating die head.

According to some embodiments of this application, a first sealing member is disposed between adjacent two of the first lip modules 12.

The first sealing member may be a silicone sealing gasket, a rubber sealing gasket, or the like.

The first sealing member improves the sealing performance of the first die head 1, reducing the risk of slurry leakage from the first die head 1.

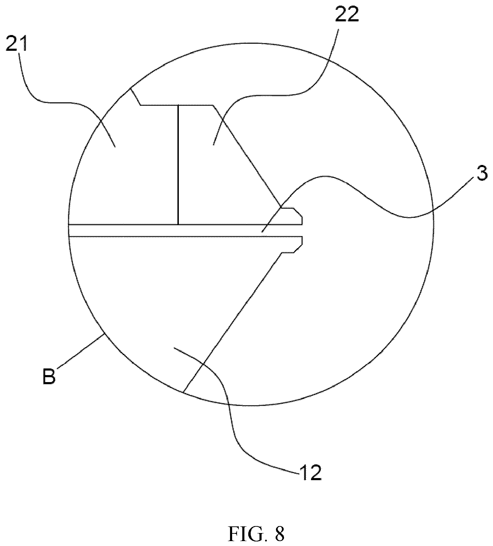

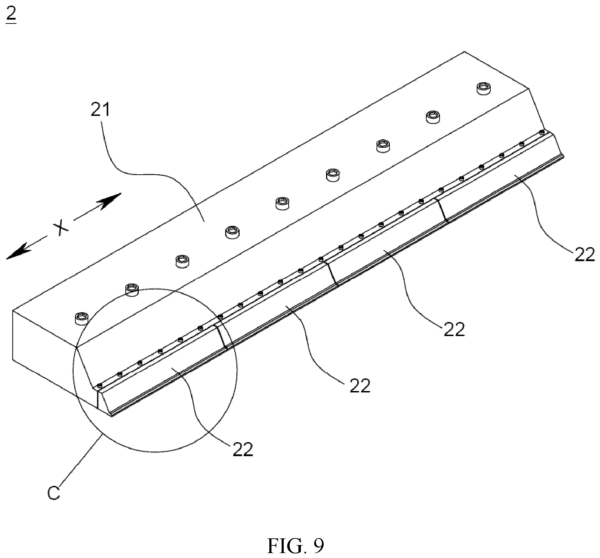

According to some embodiments of this application, referring to FIGs. 8 and 9, the first die head 1 includes a first die head body 11 and a plurality of first lip modules 12, the plurality of first lip modules 12 are spliced sequentially along a first direction X, and each of the first lip modules 12 is detachably connected to the first die head body 11. The second die head 2 includes a second die head body 21 and a plurality of second lip modules 22, the plurality of second lip modules 22 are spliced sequentially along the first direction X, each of the second lip modules 22 is detachably connected to the second die head body 21, and a gap between the second lip module 22 and the first lip module 12 forms a lip 3 of the coating die head.

Lengths of the plurality of second lip modules 22 may be the same/different.

In some embodiments, the second die head 2 may include one second lip module 22, the second lip module 22 is detachably connected to the second die head body 21, and the length of the second lip module 22 is substantially consistent with the length of the first lip modules 12 after splicing.

In some embodiments, the second lip modules 22 are in one-to-one correspondence with the first lip modules 12, allowing for synchronous replacement.

In some embodiments, considering the processing costs and processing difficulty, the accuracy of processing the end surface of the second lip module 22 may be decreased. In addition, after the second lip modules 22 are spliced, an assembly gap is likely to be present between adjacent second lip modules 22, and to improve the sealing performance of the second die head 2 formed through splicing, a sealing member may be disposed between adjacent second lip modules 22.

The second lip module 22 and the second die head body 21 may be connected via a mortise-tenon structure or may be connected via a fastener such as a screw or a bolt and a nut.

When the lip 3 of the coating die head is worn or deformed, the first lip module 12 or the second lip module 22 may be replaced or repaired individually without the need to replace the entire coating die head, thus reducing the manufacturing costs.

According to some embodiments of this application, the second lip modules 22 are in one-to-one correspondence with the first lip modules 12.

The second lip modules 22 are in one-to-one correspondence with the first lip modules 12, meaning that the first lip module 12 and the second lip module 22 are substantially consistent in position and length.

Such design simplifies the structure of the first lip module 12 and the second lip module 22, reducing the manufacturing costs.

According to some embodiments of this application, a first plating is disposed on a side of the first lip module 12 facing towards the second lip module 22, and a second plating is disposed on a side of the second lip module 22 facing towards the first lip module 12.

The first plating and the second plating may be coatings that enhance hardness and mechanical strength, and types of such coatings are known to persons skilled in the art and not described herein again.

Such design improves the wear resistance of the first lip module 12 and the second lip module 22, improving the service life of the first lip module 12 and the second lip module 22.

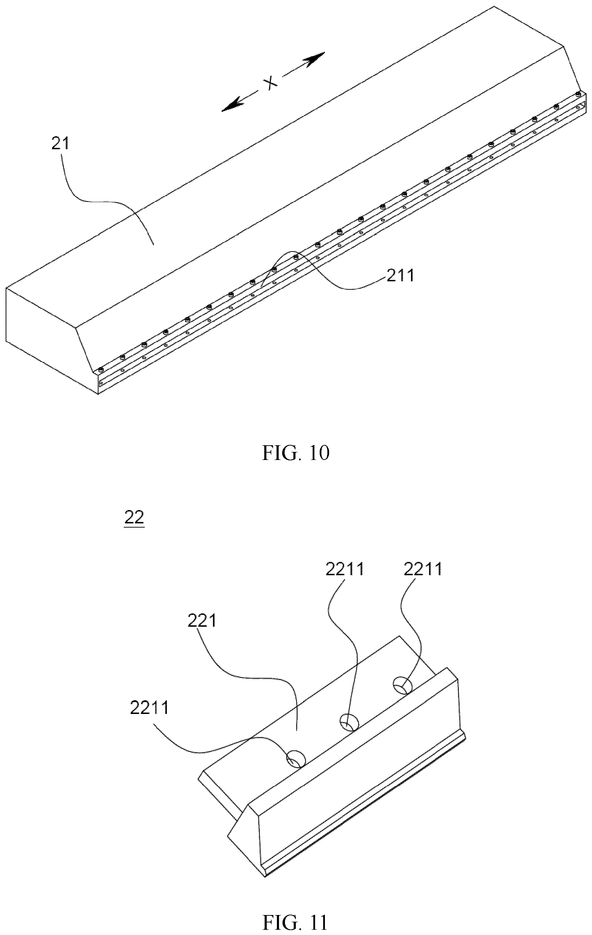

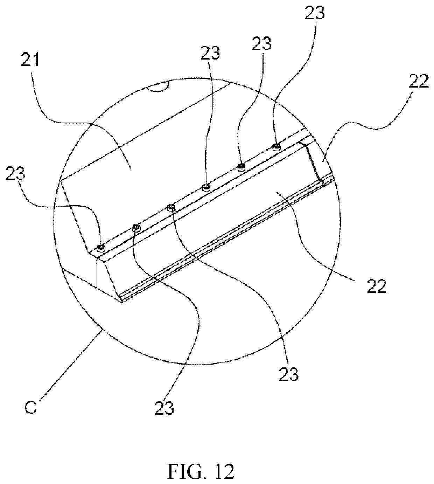

According to some embodiments of this application, referring to FIGs. 9 to 12, the second die head body 21 is provided with a second insertion slot 211 extending along the first direction X, the second lip module 22 is provided with a second protruding block 221, and the second protruding block 221 is inserted into the second insertion slot 211.

The cross-sectional shape of the second protruding block 221 may be trapezoidal, square, rectangular, semicircular, or the like.

The second protruding block 221 may be integrated with the second lip module 22 during processing, or subjected to separate processing and welded to the first lip module 12.

When the second lip module 22 is replaced, the second lip module 22 can be conveniently mounted into the second insertion slot 211 of the second die head body 21 under the action of the second protruding block 221.

According to some embodiments of this application, referring to FIGs. 9 to 12, the second die head body 21 is provided with a second insertion slot 211 extending along the first direction X, the second lip module 22 is provided with a second protruding block 221, and the second protruding block 221 is inserted into the second insertion slot 211. The second protruding block 221 is provided with a plurality of third positioning holes 2211, the second die head 2 includes a plurality of third threaded members 23 in one-to-one correspondence with the third positioning holes 2211, and the second lip module 22 is fixed to the second die head body 21 via the third threaded member 23 penetrating through the third positioning hole 2211.

The third positioning hole 2211 may be an optical hole, a threaded hole, a countersunk hole, or the like.

The third threaded member 23 may be a screw/bolt. For example, the third threaded member 23 is a bolt, and after the third threaded member 23 penetrates through the third positioning hole 2211, the second lip module 22 can be fixed to the second die head body 21 via a nut fitting with the bolt.

The second die head 2 may further include a gasket fitting with the third threaded member 23.

In some embodiments, to fit with the third threaded member 23, a second threaded hole fitting with the third threaded member 23 may be processed in the side wall of the second insertion slot 211.

The third threaded member 23 improves the stability of connection between the second lip module 22 and the second die head body 21.

According to some embodiments of this application, a second sealing member is disposed between adj acent two of the second lip modules 22.

The second sealing member may be a silicone sealing gasket, a rubber sealing gasket, or the like.

The second sealing member improves the sealing performance of the second die head 2, reducing the risk of slurry leakage from the second die head 2.

According to some embodiments of this application, this application further provides a coating apparatus, including the coating die head in any one of the foregoing solutions.

According to some embodiments of this application, referring to FIGs. 1 to 8, this application provides a coating die head. The coating die head includes a first die head 1 and a second die head 2 opposite each other. The first die head 1 includes a first die head body 11 and four first lip modules 12, and the four first lip modules 12 are spliced sequentially along a first direction X. Each of the first lip modules 12 is detachably connected to the first die head body 11, each of the first lip modules 12 is provided with a first groove 121, the first grooves 121 of the four first lip modules 12 are spliced to form a main chamber for storing a slurry, and the first direction X is a length direction of the main chamber.

The first die head body 11 includes a base 111 and a boss 112. The boss 112 protrudes from a first surface 1111 of the base 111, the first lip module 12 is disposed on the first surface 1111, the boss 112 is provided with a first insertion slot 1121 extending along the first direction X, each of the first lip modules 12 is provided with a first protruding block 122, and the first protruding block 122 is inserted into the first insertion slot 1121.

The first insertion slot 1121 is provided with a plurality of first positioning holes 1122, the first die head 1 includes a plurality of first threaded members 13 in one-to-one correspondence with the first positioning holes 1122. The first surface 1111 is provided with a plurality of second positioning holes 1112, the first die head 1 further includes a plurality of second threaded members 14 in one-to-one correspondence with the second positioning holes 1112, and the first lip module 12 is fixed to the first die head body 11 via the first threaded member 13 penetrating through the first positioning hole 1122 and the second threaded member 14 penetrating through the second positioning hole 1112.

In producing electrode plates with different widths, the first lip module 12 may be replaced or recombined, allowing the length of the main chamber to match the width of the electrode plate. Referring to FIG. 2, when it is necessary to produce a narrower electrode plate, after one of the first lip modules 12 in the middle of the first die head 1 is removed, the remaining first lip modules 12 may be spliced sequentially along the first direction X, such that the main chamber of the first die head 1 after splicing becomes shorter to adapt to narrower electrode plate.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A coating die head, comprising a first die head and a second die head opposite each other, wherein the first die head comprises a first die head body and a plurality of first lip modules, the plurality of first lip modules are spliced sequentially along a first direction, each of the first lip modules is detachably connected to the first die head body, each of the first lip modules is provided with a first groove, the first grooves of the plurality of first lip modules are spliced to form a main chamber for storing a slurry, and the first direction is a length direction of the main chamber.

2. The coating die head according to claim 1, wherein the first die head body is provided with a first insertion slot extending along the first direction, each of the first lip modules is provided with a first protruding block, and the first protruding block is inserted into the first insertion slot.

3. The coating die head according to claim 2, wherein the first insertion slot is provided with a plurality of first positioning holes, the first die head comprises a plurality of first threaded members in one-to-one correspondence with the first positioning holes, and the first lip module is fixed to the first die head body via the first threaded member penetrating through the first positioning hole.

4. The coating die head according to claim 2 or 3, wherein the first die head body comprises a base and a boss, the boss protrudes from a first surface of the base, the first lip module is disposed on the first surface, and the first insertion slot is provided in the boss.

5. The coating die head according to claim 4, wherein the first surface is provided with a plurality of second positioning holes, the first die head further comprises a plurality of second threaded members in one-to-one correspondence with the second positioning holes, and the first lip module is fixed to the base via the second threaded member penetrating through the second positioning hole.

6. The coating die head according to any one of claims 1 to 5, wherein the first lip module is provided with a second groove, and the second grooves of the plurality of first lip modules are spliced to form an auxiliary chamber for storing the slurry.

7. The coating die head according to any one of claims 1 to 5, wherein a first sealing member is disposed between adjacent two of the first lip modules.

8. The coating die head according to any one of claims 1 to 7, wherein the second die head comprises a second die head body and a plurality of second lip modules, the plurality of second lip modules are spliced sequentially along the first direction, each of the second lip modules is detachably connected to the second die head body, and a gap between the second lip module and the first lip module forms a lip of the coating die head.

9. The coating die head according to claim 8, wherein the second lip modules are in one-to-one correspondence with the first lip modules.

10. The coating die head according to claim 8 or 9, wherein a first plating is disposed on a side of the first lip module facing towards the second lip module, and a second plating is disposed on a side of the second lip module facing towards the first lip module.

11. The coating die head according to claim 8 or 9, wherein the second die head body is provided with a second insertion slot extending along the first direction, the second lip module is provided with a second protruding block, and the second protruding block is inserted into the second insertion slot.

12. The coating die head according to claim 11, wherein the second protruding block is provided with a plurality of third positioning holes, the second die head comprises a plurality of third threaded members in one-to-one correspondence with the third positioning holes, and the second lip module is fixed to the second die head body via the third threaded member penetrating through the third positioning hole.

13. The coating die head according to any one of claims 8 to 12, wherein a second sealing member is disposed between adj acent two of the second lip modules.

14. A coating apparatus, comprising the coating die head according to any one of claims 1 to 13.
